# DEMANDE DE BREVET EUROPEEN

(11) **EP 0 796 565 A1**
(43) Date de publication de la demande: **24.09.1997**
(21) Numéro de dépôt: 97400591.0
(22) Date de dépôt: 17.03.1997
(51) Int. Cl.: A23K 1/18, A61K 7/16

(54) **Produit de traitement par voie orale pour animaux**

(30) Priorité: 18.03.1996 FR 9603351
(71) Demandeur: Barbieux, Serge, F-77300 Fontainebleau (FR); Santanimal S.à.r.l., 51450 Betheny (FR); Etablissements Pietrement, 77650 Ste Colombe (FR)
(72) Inventeur: Barbieux, Serge, 77370 Fontainebleau (FR)
(74) Mandataire: Keib, Gérard

(57) **Abrégé**

Un produit de traitement (10) par voie orale pour animal de compagnie comprend un support à base d'une matière mastiquable additionnée d'une ou plusieurs matières actives de traitement.

Les dimensions du support et la composition de la matière mastiquable sont telles que le produit de traitement est lentement dégradable par l'animal pendant une période de mastication, les matières actives de traitement agissant pendant cette période de mastication.

La matière active est de préférence un produit d'hygiène buccale.

## Description

La présente invention concerne un produit de traitement par voie orale pour animal de compagnie. Elle concerne également un procédé de fabrication d'un tel produit.

Il est fréquent d'administrer aux animaux de compagnie et notamment aux chiens, des produits d'hygiène ou de diététique, absorbés par voie orale, sous forme de liquides ou cachets.

Cependant l'animal refuse souvent d'ingérer le produit et les matières actives de traitement qu'il renferme.

De plus, ce type de produit convient particulièrement bien aux traitements internes, notamment pour faciliter la digestion, améliorer la beauté du pelage, retarder les effets du vieillissement, mais n'est pas du tout adapté pour traiter localement la gueule de l'animal afin de supprimer la mauvaise haleine et d'entretenir la dentition.

On connaît à cet usage des produits tels que des os naturels ou artificiels, des peaux de buffle, que l'animal peut mâcher et déchiqueter pendant un certain temps et qui exercent une action mécanique sur la dentition, afin notamment d'en éliminer le tartre et les résidus d'aliments.

Cependant, ces produits n'ont qu'une action locale et par contact avec la dentition, ce qui limite considérablement leurs effets sur l'hygiène buccale de l'animal.

La présente invention a pour objet de proposer un produit de traitement qui permette efficacement de traiter localement la gueule des animaux de compagnie, afin d'en parfaire l'hygiène.

Le produit de traitement par voie orale visé par l'invention comprend un support à base d'une matière mastiquable additionnée d'une ou plusieurs matières actives de traitement.

Ce produit est caractérisé en ce que les dimensions du support et la composition de la matière mastiquable sont telles que ce produit de traitement est lentement dégradable par l'animal pendant une période de mastication, les matières actives de traitement agissant pendant cette période de mastication.

Ainsi, par un choix approprié des formes et de la nature de la composition de la matière mastiquable, on oblige l'animal à mastiquer le produit de traitement pendant une durée suffisante pour que la ou les matières actives puissent agir localement.

De préférence, le support comprend en outre des matières abrasives assimilables par l'animal.

Lors de la période de mastication, ces matières ont alors une action légèrement abrasive sur les dents de l'animal, complétant ainsi par une action mécanique, l'action des matières actives de traitement.

Selon une version préférée de l'invention, le support comprend en outre une matière d'appétence qui incite l'animal à consommer le produit de traitement.

Le produit a de manière avantageuse, une forme allongée d'une longueur égale à au moins 50 mm et égale de préférence à 100 mm. Pour être consommé, le produit de traitement doit alors nécessairement être croqué par l'animal et mâché avant d'être ingéré.

Selon un autre aspect de l'invention, un procédé de fabrication d'un produit de traitement conforme à l'invention est caractérisé en ce qu'il comprend les étapes suivantes de fabrication :
- mélange des matières du support, des matières actives de traitement sous forme de poudres et de l'eau;
- traitement du mélange par cuisson-extrusion, à une température comprise entre 90°C et 110°C ;et
- ressuyage du produit extrudé à l'air libre.

D'autres particularités et avantages de l'invention apparaîtront encore dans la description ci-après.

Aux dessins annexés, donnés à titre d'exemples non limitatifs :
- la figure 1 est une vue en perspective d'un produit de traitement conforme à l'invention ; et
- la figure 2 est une vue schématique illustrant le procédé de fabrication conforme à l'invention.

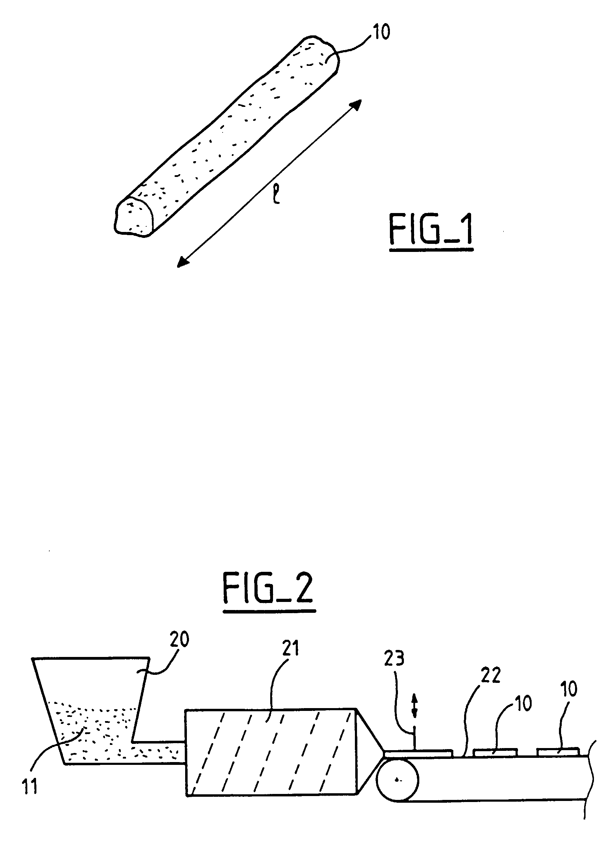

En référence à la figure 1 tout d'abord, le produit de traitement 10 par voie orale pour animal de compagnie, notamment pour chiens, comprend un support à base d'une matière mastiquable additionnée d'une ou plusieurs matières actives de traitement.

Les dimensions du support et la composition de la matière mastiquable sont telles que le produit de traitement est lentement dégradable par l'animal pendant une période de mastication, les matières actives de traitement agissant pendant cette période de mastication. Cette dernière peut avoir une durée de l'ordre de 1 à 5 minutes en fonction de la taille de l'animal.

La matière mastiquable comprend un mélange d'amidons, de farine de viande et de gommes. Elle peut en outre renfermer des conservateurs pour stabiliser le produit dans le temps.

Le support comprend de préférence une matière d'appétence renfermant au moins 4% de poudre d'os grossière.

On introduit également dans le support, des matières abrasives assimilables par l'animal telles que du calcaire marin broyé finement (KIESELGUR) ou de la poudre de pierre ponce.

Ces poudres ainsi que la poudre d'os ont une action légèrement abrasive sur la dentition de l'animal lors de la période de mastication du produit 10.

L'ensemble des matières constituant le support du produit 10 est additionné d'eau, dans une proportion comprise entre 25 et 35% du poids total du produit 10 en fin de fabrication. La présence d'eau permet de texturer le produit 10 et de lui donner une consistance de gomme.

Le produit de traitement 10 a, comme illustré à la figure 1, une forme allongée d'une longueur 1 égale à au moins 50 mm et de préférence de l'ordre de 100 mm.

Il peut se présenter sous la forme d'un bâtonnet de section rectangulaire de 10 mm sur 10 mm et être éventuellement coloré pour avoir un aspect de viande grillée.

Par sa forme et sa composition, le produit de traitement est ainsi lentement dégradable par mastication, permettant aux matières actives de traitement d'agir.

Ces matières actives sont de préférence des produits d'hygiène buccale comprenant, à titre d'exemples non limitatifs, un agent purifiant et / ou un agent anti-tartre permettant de supprimer durablement la mauvaise haleine. Des substances actives désorisantes et / ou désinfectantes peuvent également être additionnées au produit de traitement 10. Le produit peut ainsi renfermer des huiles essentielles de cannelle, d'origan, calendula, menthe....

Ce produit de traitement 10, semblable à une pâte à mâcher pour animal, peut être fabriqué de la manière suivante en référence à la figure 2.

On mélange tout d'abord avec de l'eau les matières du support (matière mastiquable, d'appétence abrasive) et les matières actives de traitement sous forme de poudres 21 dans un réceptacle 20.

On traite ensuite ce mélange dans un cuiseur-extrudeur 21, à une température comprise entre 90°C et 110°C, sous une pression de l'ordre de 10⁵ Pa.

Le produit extrudé 10 est ensuite découpé sous forme de bâtonnets par une lame coupante 23 par exemple animée d'un mouvement de va-et-vient.

Les produits extrudés 10 sont alors conduits, par l'intermédiaire d'un convoyeur à bande 22 par exemple, dans une zone de ressuyage.

Cette étape de ressuyage est de préférence réalisée à l'air libre, pendant 4 à 5 heures. Elle a pour but de stabiliser le produit après extrusion, en homogénéisant la répartition de l'eau dans le produit.

Les bâtonnets 10 peuvent ensuite être conditionnés sous vide ou sous atmosphère contrôlée (CO₂) ensachets de plusieurs bâtonnets 10 ou en chapelet de sachets individualisant chaque bâtonnet.

Bien entendu, de nombreuses modifications peuvent être apportées à l'exemple ci-dessus sans sortir du cadre de l'invention.

Ainsi, le produit de traitement pourrait avoir une forme allongée torsadée ou bien encore se présenter sous la forme d'un os à ronger pour chien.

D'autres matières actives pourront également être présentes dans le produit de traitement 10, telles que des matières favorisant le transit intestinal et une bonne digestion. On peut également introduire dans le produit des substances hautement énergétiques, à assimilation rapide par l'animal.

## Revendications

1. Produit de traitement (10) par voie orale pour animal de compagnie, notamment pour chien, comprenant un support à base d'une matière mastiquable additionnée d'une ou plusieurs matières actives de traitement, caractérisé en ce que les dimensions du support et la composition de la matière mastiquable sont telles que ledit produit de traitement (10) est lentement dégradable par l'animal pendant une période de mastication, les matières actives de traitement agissant pendant ladite période de mastication.

2. Produit de traitement conforme à la revendication 1, caractérisé en ce que le support comprend en outre des matières abrasives assimilables par l'animal.

3. Produit de traitement conforme à l'une des revendications 1 ou 2, caractérisé en ce que le support comprend en outre une matière d'appétence.

4. Produit de traitement conforme à l'une des revendications 1 à 3, caractérisé en ce que ladite matière d'appétence renferme au moins 4% de poudre d'os grossière.

5. Produit de traitement conforme à la revendication 1 à 4, caractérisé en ce que la matière mastiquable comprend un mélange d'amidons, de farines de viande et de gommes.

6. Produit de traitement conforme à l'une des revendications 1 à 5, caractérisé en ce qu'il a une forme allongée d'une longueur (1)égale à au moins 50 mm.

7. Produit de traitement conforme à la revendication 6, caractérisé en ce que sa longueur (1) est égale à 100 mm environ.

8. Produit de traitement conforme à l'une des revendications 1 à 7, caractérisé en ce que la matière active de traitement est un produit d'hygiène buccale.

9. Procédé de fabrication d'un produit de traitement conforme à l'une des revendications 1 à 8, caractérisé en ce qu'il comprend les étapes suivantes de fabrication :
- mélange des matières du support, des matières actives de traitement sous forme de poudres (11) et de l'eau ;
- traitement du mélange par cuisson-extrusion, à une température comprise entre 90°C et 110°C; et
- ressuyage du produit extrudé (10) à l'air libre.
